# EUROPEAN PATENT APPLICATION

(11) **EP 4 664 833 A1**
(43) Date of publication of application: **17.12.2025**
(21) Application number: 25181903.3
(22) Date of filing: 10.06.2025
(51) Int. Cl.: H04L 12/413, H04L 67/12, H04L 69/00, H04L 12/40, H04L 12/417

(54) **APPARATUS, SYSTEM AND/OR METHOD FOR PROVIDING A DATA COMMUNICATION PROTOCOL FOR A VEHICLE**

(30) Priority: 11.06.2024 US 202418739802
(71) Applicant: Harman International Industries, Incorporated, Stamford, CT 06901 (US)
(72) Inventor: PAUL, Bapi, 560016 Bangalore (IN)
(74) Representative: Rummler, Felix

(57) **Abstract**

An apparatus for in-vehicle communication, the vehicle includes a memory device; and a first controller including the memory device, the first controller being operatively coupled to a plurality of vehicle controllers via an in-vehicle network, the first controller programmed to: transmit at least a first frame including a first field and a first data to at least a second controller of the plurality of vehicle controller via the in-vehicle network; determine a first duration indicative of a first amount of time to transmit at least the first frame to the second controller; position the first duration in the first field; and transmit at least the first frame including the first duration in the first field and the first data to provide an indication to the at least the second controller to avoid transmitting data on the in-vehicle network until the first amount of time has expired.

## Description

### TECHNICAL FIELD

The present disclosure generally relates to a communication network. More specifically, the present disclosure relates to an in-vehicle communication network involving an improved controller area network (CAN) protocol.

### BACKGROUND

Modern vehicles are provided with various controllers and devices in communication with each other to perform various functions. A standard controller area network (CAN) or extended CAN hardware and protocol may be used for the in-vehicle communications. CAN broadcast message is used to communicate among various components each serving a as node of the in-vehicle network. Each node in the in-vehicle network participates to win arbitration using arbitration field before attempting to send a packet.

When a node has a packet to send via the CAN bus and the packet includes multiple frames, larger than 8 bytes, there is no guarantee on the delay between two consecutive frames as sending node needs to win arbitration before it attempts to send each frame due to the limitation of the CAN protocols. This may cause delay for the in-vehicle network. As more features are provided to the vehicle (e.g., video, audio and multimedia features), it has become increasingly often for one or more node to send larger data packets via the in-vehicle network.

### SUMMARY

An apparatus for in-vehicle communication, the vehicle includes a memory device; and a first controller including the memory device, the first controller being operatively coupled to a plurality of vehicle controllers via an in-vehicle network, the first controller programmed to: transmit at least a first frame including a first field and a first data to at least a second controller of the plurality of vehicle controller via the in-vehicle network;
determine a first duration indicative of a first amount of time to transmit at least the first frame to the second controller; position the first duration in the first field; and transmit at least the first frame including the first duration in the first field and the first data to provide an indication to the at least the second controller to avoid transmitting data on the in-vehicle network until the first amount of time has expired.

A method for performing in-vehicle communication, the vehicle includes transmitting, via a first controller, at least a first frame including a first field and a first data to at least a second controller of the plurality of vehicle controller via the in-vehicle network; determining, via the first controller, a first duration indicative of a first amount of time to transmit at least the first frame to the second controller; positioning, via the first controller, the first duration in the first field; and transmitting, via the first controller, at least the first frame including the first duration in the first field and the first data to provide an indication to the at least the second controller to avoid transmitting data on the in-vehicle network until the first amount of time has expired.

A non-transitory computer-readable medium includes instructions, when executed by a first controller of a vehicle, cause the first controller to transmit at least a first frame including a first field and a first data to at least a second controller of the plurality of vehicle controller via an in-vehicle network; determine a first duration indicative of a first amount of time to transmit at least the first frame to the second controller; position the first duration in the first field; and transmit at least the first frame including the first duration in the first field and the first data to provide an indication to the at least the second controller to avoid transmitting data on the in-vehicle network until the first amount of time has expired.

### BRIEF DESCRIPTION OF THE DRAWINGS

For a better understanding of the invention and to show how it may be performed, embodiments thereof will now be described, by way of non-limiting example only, with reference to the accompanying drawings, in which:
Figure 1 illustrates an example block topology of a vehicle system having an in-vehicle network of one embodiment of the present disclosure.
Figure 2 illustrates a bit identifier diagram of an existing extended CAN protocol.
Figure 3 illustrates a bit identifier diagram of an improved CAN protocol of the present disclosure.
Figure 4 illustrates a flow diagram of a process for sending data packets using the improved CAN protocol of one embodiment of the present disclosure.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

The present disclosure generally provides for a plurality of circuits or other electrical devices. All references to the circuits and other electrical devices, and the functionality provided by each, are not intended to be limited to encompassing only what is illustrated and described herein. While particular labels may be assigned to the various circuits or other electrical devices, such circuits and other electrical devices may be combined with each other and/or separated in any manner based on the particular type of electrical implementation that is desired. It is recognized that any circuit or other electrical device disclosed herein may include any number of microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform operation(s) disclosed herein. In addition, any one or more of the electric devices may be configured to execute a computer-program that is embodied in a non-transitory computer readable medium that is programed to perform any number of the functions as disclosed.

The present disclosure proposes, among other things, a to an in-vehicle communication network utilizing an improved controller area network (CAN) protocol to enable transmitting a large data packet in consecutive frames.

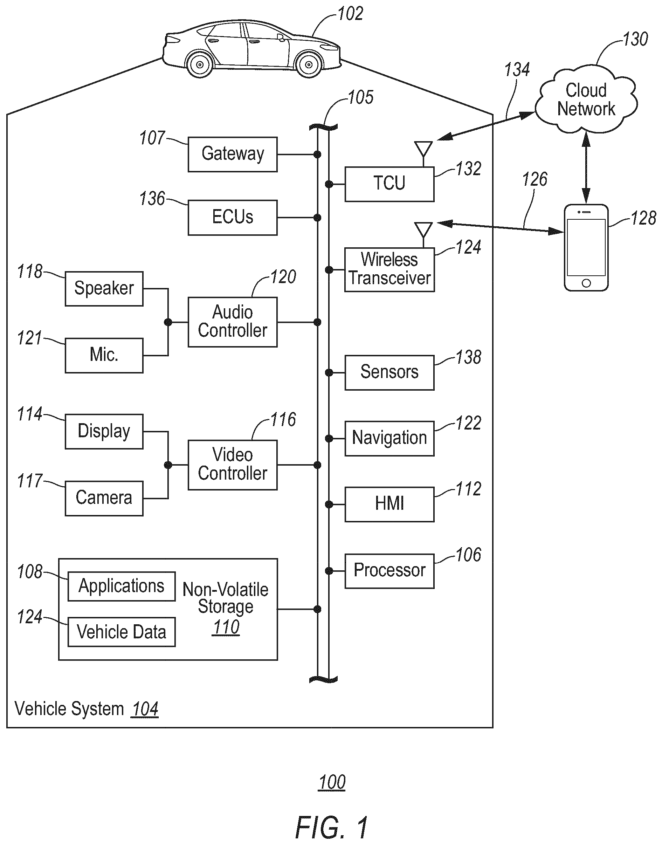

Referring to Figure 1, an example block topology of a system 100 of one embodiment of the present disclosure is illustrated. A vehicle 102 may include various types of automobiles, crossover utility vehicle (CUV), sport utility vehicle (SUV), truck, recreational vehicle (RV), boat, plane, or other mobile machine for transporting people or goods. In many cases, the vehicle 102 may be powered by an engine. As another possibility, the vehicle 102 may be a battery electric vehicle (BEV), a hybrid electric vehicle (HEV) powered by both an internal combustion engine and one or move electric motors, such as a series hybrid electric vehicle (SHEV), a plug-in hybrid electric vehicle (PHEV), a parallel/series hybrid vehicle (PSHEV), or a fuel-cell electric vehicle (FCEV). It should be noted that the illustrated system 100 is merely an example, and more, fewer, and/or differently located elements may be used.

As illustrated in Figure 1, the vehicle 102 may be provided with a vehicle system 104 including one or more processors 106 configured to perform instructions, commands, and other routines in support of the processes described herein. For instance, the vehicle system 104 may be configured to execute instructions of applications 108 to provide features such as vehicle operation controls, multimedia, or the like. Such instructions and other data may be maintained in a non-volatile manner using a variety of types of computer-readable storage medium 110. The computer-readable medium 110 (also referred to as a processor-readable medium or storage) includes any non-transitory medium that participates in providing instructions or other data that may be read by the processor 106 of the vehicle system 104. Computer-executable instructions may be compiled or interpreted from computer programs created using a variety of current and future programming languages and/or technologies.

The vehicle system 104 may be provided with one or more in-vehicle networks 105 configured to enable the communication between various components of the vehicle 102. The in-vehicle network 105 may be configured to support various communication protocol. For instance, the in-vehicle network 105 may be configured to support, but is not limited to, one or more of a controller area network (CAN), an Ethernet network, and a media-oriented system transport (MOST), as some examples. Furthermore, the in-vehicle network 105, or portions of the in-vehicle network 166, may be a wireless network accomplished via Bluetooth low-energy (BLE), Wi-Fi, or the like. In the present example, the in-vehicle network 105 may be configured to support an improved CAN communication protocol as disclosed by the present disclosure (to be discussed in detail below).

The vehicle system 104 may be further provided with one or more gateway devices 107 connected to the in-vehicle network 105 and configured to perform various operations to enable the operation of the in-vehicle network 105. For instance, the gateway device 107 may be configured to perform arbitration of frames transmitted from different nodes connected to the in-vehicle network 105 to determine the priority of the frames under the CAN protocol or the improved CAN protocol of the present disclosure. It is recognized that a node corresponds to any electronic controller that includes memory and one or more processors to execute code stored on the memory to perform any of the noted functions herein. Similarly, any device or controller as set forth herein that is coupled to the in-vehicle network 105 may be defined as a node. The gateway device 107 may be a dedicated device connected to the in-vehicle network 105. Additionally or alternatively, the gateway device 107 may be integrated with one or more components of the vehicle system 104 (e.g., the processor 106).

The vehicle system 104 may be provided with various features allowing the vehicle users to interface with the vehicle system 104. For example, the computing platform 104 may receive input from human machine interface (HMI) controls 112 connected to the in-vehicle network 105 and configured to provide for user interaction with the vehicle 102. As an example, the vehicle system 104 may interface with one or more buttons, switches, knobs, touch screen or other HMI controls configured to invoke functions on the vehicle system 104 (e.g., navigation, audio/video playback, and etc.).

The vehicle system 104 may also drive or otherwise communicate with one or more displays 114 configured to provide visual output to vehicle users by way of a video controller 116 through the in-vehicle network 105. In some cases, the display 114 may be a touch screen further configured to receive user touch input via the video controller 116, while in other cases the display 114 may be a display only, without touch input capabilities. The vehicle system 104 may also drive or otherwise communicate with one or more cameras 117 configured to provide video input by way of the video controller 116 through the in-vehicle network 105. The cameras 117 may include an exterior camera (e.g., backup camera) to provide vehicle users with visual information about the exterior situation of the vehicle 102. Additionally or alternatively, the cameras 117 may include a plurality of camera lenses and configured to enable a surrounding view function. The cameras 117 may further include an in-cabin camera configured to capture images within the cabin of the vehicle 102.

The vehicle system 104 may also drive or otherwise communicate with one or more speakers 118 configured to provide audio output to vehicle users by way of an audio controller 120 connected to the in-vehicle network 105. The vehicle system 104 may also drive or otherwise communicate with one or more microphones 121 configured to capture audio input by way of the audio controller 120.

The vehicle system 104 may also be provided with navigation and route planning features through a navigation controller 122 connected to the in-vehicle network 105 and configured to calculate navigation routes responsive to user input via e.g., the HMI controls 112, and output planned routes and instructions via the speaker 118 and/or the display 114. Location data that is needed for navigation may be determined by the communication with multiple satellites. Map data used for route planning may be stored in the storage 110 as a part of the vehicle data 124. Navigation software may be stored in the storage 110 as one the vehicle applications 108.

The vehicle system 104 may also be provided with wireless communication capabilities via a wireless transceiver 124 connected to the in-vehicle network 105 and configured to wirelessly communicate with a mobile device 128 of vehicle users via a wireless connection 126. The mobile device 128 may be any of various types of portable computing devices, such as cellular phones, tablet computers, wearable devices, smart watches, smart fobs, laptop computers, portable music players, or other device capable of communication with the vehicle system 104. The wireless transceiver 126 may be configured to support a variety of wireless communication protocols including Wi-Fi, Bluetooth, radiofrequency identification (RFID), near-field communication (NFC), and communicate with a compatible wireless transceiver (not shown) of the mobile device 128 to enable various functions. For instance, the vehicle user may perform audio and/or video phone calls by mobile device 128 through the vehicle system 104. Additionally or alternatively, the vehicle system 104 may be configured to access a cloud network 130 via the mobile device 128 through wireless connection technologies such as cellular network.

The vehicle system 104 may also be provided with a telematics control unit (TCU) 132 connected to the in-vehicle network 105 and configured to control telecommunication between vehicle 102 and the cloud network 130 through a wireless connection 134 (e.g., using a modem) in addition to or in lieu of via the mobile device 128. For instance, the vehicle system 104 may download and/or upload data from/to the cloud network 130 via the TCU 132 or through the mobile device 128. It is noted that the term cloud network is used as a general term in the present disclosure and may include any computing network involving servers, carriers, routers, computers, controllers, circuitry or the like configured to store data and perform data processing functions and facilitate communication between various entities.

The vehicle system 104 may also be provided with various electronic control units (ECUs) 136 connected to the in-vehicle network 105 and configured to perform various operations. For instance, the ECUs 136 may include a powertrain control module (PCM) configured to operate the vehicle powertrain (e.g., engine, motor, transmission) based on user inputs and sensor data. The ECUs 136 may further include a body control module (BCM) configured to perform vehicle body operations (e.g., light, door, window) based on user inputs and sensor data. The ECUs 136 may further include an autonomous driving controller (ADC) configured to provide autonomous driving features of the vehicle 102 based on user inputs and sensor data. The ECUs 136 may further include a heating, ventilation and air conditioning (HVAC) controller configured to provide vehicle cabin climate controls.

The vehicle system 104 may also include various vehicle sensors 138 connected to the in-vehicle network 105 and configured to capture the various sensor data to facilitate vehicle operations. The sensors data may be sent to the ECUs 168 and/or other components of the vehicle system 104 via the in-vehicle network 105.

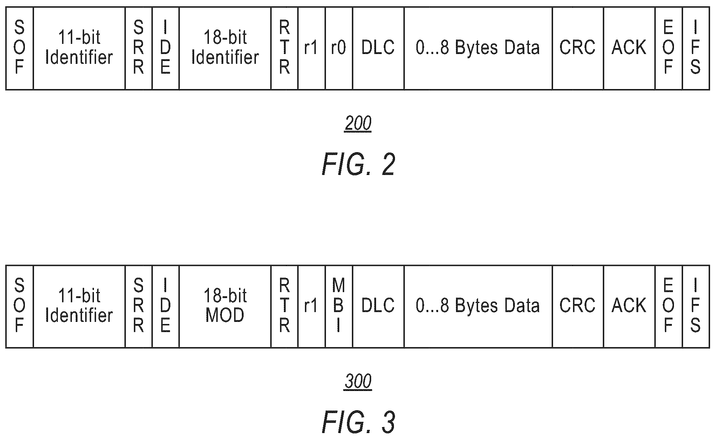

As discussed above, the in-vehicle network 105 may be configured to facilitate communication between various components of the vehicle system 104 using an improved CAN protocol proposed by the present disclosure. To better demonstrate the present disclosure, Figure 2 illustrates a bit identifier diagram of an extended frame 200 under an existing extended CAN protocol, and Figure 3 illustrates a bit identifier diagram of an improved frame 300 under the improved CAN protocol of the present disclosure.

Referring to Figure 2, the extended frame 200 under the extended CAN protocol includes a plurality of bit fields for data identifications. The extended frame 200 starts with a start of frame (SOF) bit which marks the start of a message and is used to synchronize various nodes on the in-vehicle network 105 after being idle. In the present example, each component of the vehicle 104 may serve as an individual node of the in-vehicle network 105. Following the SOF, the extended frame 200 further includes a 11-bit identifier which establishes a priority of the message. A lower binary value is generally associated with a higher priority of the extended frame 200. The in-vehicle network 105 may be associated with a limited bandwidth or transmission capacity. In order for a node to send a data packet, an arbitration may be made based on the priority of the data packet.

The extended frame 200 further includes a substitute remote request (SRR) bit which serves a placeholder. The extended frame 200 further includes a single identifier extension (IDE) bit that indicates whether additional identifier bits are following. Since the extended frame 200 is an extended frame (as opposed to a standard CAN frame), the IDE bit should be recessive (e.g., logical 1) to indicate the additional identifier bits are to follow. The additional identifier includes 18 bits in addition to the 11-bit identifier located before SRR.

The extended frame 200 further includes a single remote transmission request (RTR) bit after the 18-bit additional identifier to identify whether the frame is a data frame or a remote frame. The extended frame 200 further includes a reserved bit r1 after the RTR bit. The extended frame 200 further includes another reserved bit r0 after the first reserved bit r1.

The extended frame 200 further includes a 4-bit data length code (DLC) that indicates the number of bytes of data being transmitted in the current extended frame 200. Under the extended CAN protocol, each frame 200 may contain 0 to 8 bytes (e.g., up to 64 bits) of data located after the DLC.

The extended frame 200 further includes a 16-bit cyclic redundancy check (CRC) that includes the checksum (e.g., number of bits transmitted) of the preceding application data for error detection. The extended frame 200 further includes a 2-bit acknowledge slot to acknowledge an error-free message has been sent.

The extended frame 200 further includes a 7-bit end-of-frame (EOF) field that marks the end of the current extended frame 200 and disables bit-stuffing, indicating a stuffing error when dominant (e.g., logical 0). The extended frame 200 further includes a 7-bit interframe space (IFS) that includes the time required by the controllers to move a correctly received frame to the proper position in the message buffer area.

Referring to Figure 3, the improved frame 300 under the improved CAN protocol proposed by the present disclosure is illustrated. With continuing reference to Figure 2 the improved frame 300 is configured based on a modification of the extended frame 200 under the extended CAN protocol. More specifically, the improved CAN protocol of the present disclosure replaces the 18-bit additional identifier after the IDE with an 18-bit medium occupancy duration (MOD) identifier to indicate the number of microseconds that a sending node from which the improved frame 300 originates is expected to hold and occupy the in-vehicle network 205 during which no other nodes may occupy the in-vehicle network 105. The improved CAN protocol further replaces the reserved bit r0 with a medium busy indicator to indicate whether the 18-bit MOD indicator is present. A dominant bit (e.g., logical 0) may indicate the MOD indicator is not present in the current frame 300 while a recessive bit (e.g., logical 1) may indicate the MOD indicator is present in the current frame 300. Responsive to detecting the MOD indicator is present and indicative a microseconds value, the vehicle system 104 (e.g., via the gateway 107) reserves the in-vehicle network 105 for a duration as indicated in the MOD indicator value. A countdown timer may be used by one or more nodes of the in-vehicle network 105 to determine whether the duration has passed. Once passed, the in-vehicle network is reopened for other transmissions.

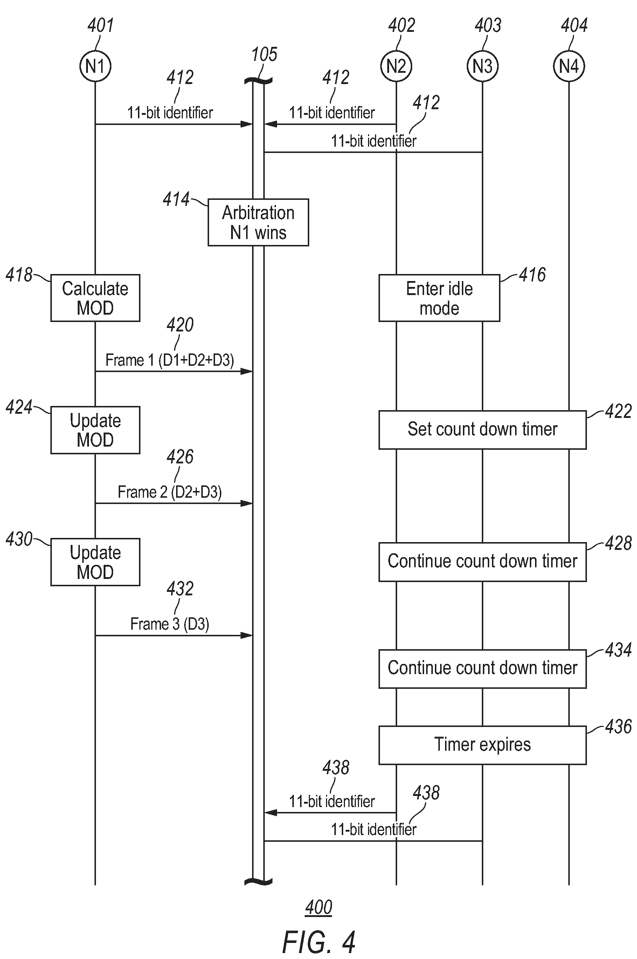

Referring to Figure 4, an example flow diagram of a process 400 for transmitting data via the in-vehicle network 105 using the improved CAN protocol of one embodiment of the present disclosure is illustrated. With continuing reference to Figure 1, there are at least four nodes connected to the in-vehicle network 105 in support of the improved CAN protocol in the present example. A first node 401 (e.g., a first controller) may transmit a large packet (e.g., greater than 16 bytes) including three frames other nodes in the system via the in-vehicle network 105. It is recognized that all nodes as disclosed herein may be referred to as "controller" and it is further recognized that each node includes memory and at least one processor including instructions to execute code stored on the memory to perform any of the noted functions disclosed herein. It is further recognized that the number of nodes in the vehicle network 105 may vary based on the criteria of a particular implementation. A second node 402 (e.g., a second controller) and a third node 403 (e.g., third controller) of the plurality of nodes may each transmit a single frame over the in-vehicle network 105. A fourth node 404 also of the plurality of nodes has no frame to transmit in the present example. It is noted that although only four nodes are involved in the process 400, the present disclosure is not limited thereto. The process 400 may be applicable to an in-vehicle network with more or less nodes connected thereto.

At operation 412, each of the first node 401, the second node 402 and the third node 403 individually starts SOF at substantially the same time and transmits the 11-bit identifier for arbitration. Since the fourth node 404 does not have a frame to transmit, it is not involved in the arbitration. The 11-bit identifiers from each respective nodes may be transmitted to the in-vehicle network 105 for arbitration. The arbitration may be performed in various manners. For instance, the arbitration may be performed via one or more nodes connected to the in-vehicle network.

At operation 414, responsive to receive the 11-bit identifier for each of the first node 401, the second node 402, and the third node 403, the in-vehicle network 105 performs the arbitration (via one or more nodes) to determine the which of the three nodes is to occupy the in-vehicle network 105 and transmit the data packet. As discussed above, the 11-bit identifier may include a priority of the data packet and/or frame. The in-vehicle network 105 may perform the arbitration using the priority information and determines the data packet and/or frame with the highest priority wins the arbitration. In the present example, the in-vehicle network 105 determines the first node 401 wins the arbitration and announces the arbitration result.

At operation 416, responsive to losing the arbitration, the second node 402 and the third node 403 enter idle mode and does not attempt initiate SOF until the in-vehicle network 105 is free.

At operation 418, responsive to winning the arbitration, the first node 401 calculate a first MOD indicative of a total medium occupancy duration to send all frames of the packet in a consecutive manner. As discussed above, the packet is large and has to be divided into three frames to transmit and each frame is associated with a duration. For instance, the first frame may be associated with a first duration of D1 and include a first portion of the data packet (e.g., first data), the second frame may be associated with a second duration of D2 and include a second portion of the data packet (e.g., second data), and a third frame may be associated with a third duration of D3 and include a third portion of the data packet (e.g., third data). The first MOD (e.g., total MOD) cover the total duration required to transmit all of the three frames (e.g., D1+D2+D3). A total MOD (e.g., first MOD, second MOD, third MOD) may be calculated by dividing the frame length in units of bit by an in-vehicle network speed in units of bits/µs. In one example, the gateway device 107 may calculate the first MOD using the entire size of the packet without determining the duration required for each frame. In an alternative example, the gateway device 107 may first determine the data size for each respective frame and determine the duration for transmitting each frame respectively. The total MOD may be determined by summing the individual durations. The in-vehicle network speed may be a predetermined speed associated with the in-vehicle network 105. Additionally or alternatively, the gateway device 107 may dynamically measure and update the in-vehicle network speed over time.

In response to determining the first MOD, the first node 401 is ready to send the first frame of the packet. At operation 420, the first node 401 sets the MBI to true (e.g., recessive, logical 1) and assigns the first MOD to the MOD field of the first frame and transmits the first frame to the in-vehicle network 105. As discussed above, the first MOD includes the total duration required to transmit all of the three frames (e.g., first MOD = D1+D2+D3).

Since the first packet is broadcasted to the in-vehicle network 105, all nodes connected to the in-vehicle network 105 receives and/or observes the first packet. In response to receiving the first packet including the true MBI and the first MOD, at operation 422, the second node 402, the third node 403 and the fourth node 404 starts a countdown timer using the first MOD in units of microseconds while continue to refrain from attempting to transmitting to the in-vehicle network 105 until the countdown timer expires. It is noted that although the fourth node 404 is not involved in the prior arbitration and has no data packet to send, it is still involved in the countdown timer to refrain from occupying the in-vehicle network 105.

At operation 424, in response to completing the first frame (or alternatively while the first frame is still being transmitted), the first node 401 prepares to transmit the second frame of the packet. Similar to operation 418, the first node 401 calculates a second MOD to cover the duration for transmitting the second and third frames (e.g., D2+D3). In one example, the first node 401 may subtract the time elapsed (e.g., D1) from the first MOD to determine the second MOD. Alternatively, the first node 401 may use the size of the second and third frame, and the in-vehicle network speed to individually calculate the second MOD. In a further example, the first node 401 may measure and/or determine an updated in-vehicle network speed while transmitting the first frame and take the updated in-vehicle network speed into account while calculating the second MOD.

At operation 426, the first node 401 sets the MOD field of the second frame using the second MOD (e.g., D2+D3) and transmits the second frame to the in-vehicle network 105.

At operation 428, the second node 402, the third node 403 and the fourth node 404 continues the countdown timer originally set using the first MOD. Alternatively, if second MOD included in the second frame significantly differs from the remaining time of the countdown timer (e.g., more than 10 µs) indicate the first MOD is inaccurate, the second node 402, the third node 403 and the fourth node 404 may adjust the countdown timer using the second MOD included in the second frame.

At operation 430, in response to completing the second frame (or alternatively while the second frame is still being transmitted), the first node 401 prepares to transmit the third frame of the packet. Similar to operation 424, the first node 401 calculates a third MOD to cover the duration for transmitting the remaining third frame (e.g., D3). In one example, the first node 401 may subtract the time elapsed (e.g., D2) from the second MOD to determine the third MOD. Alternatively, the first node 401 may use the size of the remaining third frame, and the in-vehicle network speed to individually calculate the third MOD. In a further example, the first node 401 may measure and/or determine an updated in-vehicle network speed while transmitting the first and second frames and take the updated in-vehicle network speed into account while calculating the third MOD.

At operation 432, the first node 401 sets the MOD field of the third frame using the third MOD (e.g., D3) and transmits the third frame to the in-vehicle network 105.

At operation 434, the second node 402, the third node 403 and the fourth node 404 continues the countdown timer originally set using the first MOD (or the adjusted countdown timer set using the second MOD). Alternatively, if third MOD included in the third frame significantly differs from the remaining time of the countdown timer (e.g., more than 10 µs) indicate the first and/or second MOD is inaccurate, the second node 402, the third node 403 and the fourth node 404 may adjust the countdown timer using the third MOD included in the third frame.

At operation 436, once the countdown timer has expired, indicative that the first node 401 has finished transmitted all the three frames without interruption from other nodes, all nodes connected to the in-vehicle network 105 may be allowed to start attempting transmitting SOF after an IFS associated with the third frame has been received at the first node 401.

Since the second node 402 and the third node 403 each has data to transmit, at operation 438, the second node 402 and the third node 403 transmits, for example, the 11-bit identifier to the in-vehicle network 105 for arbitration based on the priority of the respective data packets.

The operations of the process 400 may be applied to various situations. For instance, responsive to a user input indicative of a user intend to perform one or more vehicle operations, the HMI controller 112 server as a node may generate and transmit one or more data frames to one or more ECUs 136 (or other components) using the operations described in the process 400. Responsive to receiving the one or more data frames, the corresponding ECUs 136 may perform vehicle operations as instructed by the user. For instance, the PCM 136 may perform a vehicle drivetrain operation such as accelerate, decelerate, entering electric vehicle regen mode, switch between driving modes or the like. The BCM 136 may perform vehicle body operations such as operating vehicle lights, doors, window, trunks or the like. The ADC 136 may perform an autonomous driving maneuver such as accelerate, braking, navigation, steering or the like. The HVAC controller 136 may perform vehicle cabin temperature control operations. Additionally or alternatively, the user input may be originated from the mobile device 128 and received by the vehicle system via the wireless transceiver 124 in addition to or in lieu of via the HMI controls 112. Additionally or alternatively, the user input may be received via the TCU from the cloud network.

The algorithms, methods, protocols, or processes disclosed herein can be deliverable to or implemented by a computer, controller, or processing device, which can include any dedicated electronic control unit or programmable electronic control unit. Similarly, the algorithms, methods, or processes can be stored as data and instructions executable by a computer or controller in many forms including, but not limited to, information permanently stored on non-writable storage media such as read only memory devices and information alterably stored on writeable storage media such as compact discs, random access memory devices, or other magnetic and optical media. The algorithms, methods, or processes can also be implemented in software executable objects. Alternatively, the algorithms, methods, or processes can be embodied in whole or in part using suitable hardware components, such as application specific integrated circuits, field-programmable gate arrays, state machines, or other hardware components or devices, or a combination of firmware, hardware, and software components.

While exemplary embodiments are described above, it is not intended that these embodiments describe all possible forms encompassed by the claims. The words used in the specification are words of description rather than limitation, and it is understood that various changes may be made without departing from the spirit and scope of the disclosure. The words processor and processors may be interchanged herein, as may the words controller and controllers.
As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to strength, durability, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. An apparatus for in-vehicle communication, the vehicle comprising:
a memory device; and
a first controller including the memory device, the first controller being operatively coupled to a plurality of vehicle controllers via an in-vehicle network, the first controller programmed to:
transmit at least a first frame including a first field and a first data to at least a second controller of the plurality of vehicle controller via the in-vehicle network;
determine a first duration indicative of a first amount of time to transmit at least the first frame to the second controller;
position the first duration in the first field; and
transmit at least the first frame including the first duration in the first field and the first data to provide an indication to the at least the second controller to avoid transmitting data on the in-vehicle network until the first amount of time has expired.

2. The apparatus of claim 1, wherein the first controller is further programmed to:
transmit at least a second frame including a second field and a second data to at least the second controller via the in-vehicle network following transmitting the first frame;
determine a second duration indicative of a second amount of time to transmit at least the second frame to the second controller, wherein the second duration is shorter than the first duration;
position the second duration in the second field transmit the at least the second frame; and
transmit at least the second frame including the second duration in the second field and the second data to provide an indication to the at least the second controller to avoid transmitting data on the in-vehicle network upon an expiration of the second amount of time.

3. The apparatus of claim 2, wherein the first duration includes an amount of time to transfer the first frame by the first controller and the second duration.

4. The apparatus of claim 2 or 3, wherein the first data and the second data belong to a data packet, the first controller is further programmed to:
determine the first duration using a total size of the packet and a transmission speed of the in-vehicle network.

5. The vehicle system of claim 4, wherein the first controller is further configured to:
determine the second duration by subtracting an amount of time to transfer the first frame from the first duration.

6. The vehicle system of any of claims 2 to 5, wherein the first controller is further programmed to:
measure a transmission speed of the first frame transmitted by the first controller via the in-vehicle network, and
adjust the second duration using the transmission speed.

7. A method for performing in-vehicle communication, the vehicle comprising:
transmitting, via a first controller, at least a first frame including a first field and a first data to at least a second controller of the plurality of vehicle controller via the in-vehicle network;
determining, via the first controller, a first duration indicative of a first amount of time to transmit at least the first frame to the second controller;
positioning, via the first controller, the first duration in the first field; and
transmitting, via the first controller, at least the first frame including the first duration in the first field and the first data to provide an indication to the at least the second controller to avoid transmitting data on the in-vehicle network until the first amount of time has expired.

8. The method of claim 7, further comprising:
transmitting, via the first controller, at least a second frame including a second field and a second data to at least the second controller via an in-vehicle network following transmitting the first frame;
determining, via the first controller, a second duration indicative of a second amount of time to transmit at least the second frame to the second controller, wherein the second duration is shorter than the first duration;
positioning, via the first controller, the second duration in the second field transmit the at least the second frame; and
transmit, via the first controller, at least the second frame including the second duration in the second field and the second data to provide an indication to the at least the second controller to avoid transmitting data on the in-vehicle network upon an expiration of the second amount of time.

9. The method of claim 8, wherein the first duration includes an amount of time to transfer the first frame by the first controller and the second duration.

10. The method of claim 8 or 9, wherein the first data and the second data belong to a data packet, the method further comprising:
determining, via the first controller, the first duration using a total size of the packet and a transmission speed of the in-vehicle network.

11. The method of claim 10, further comprising:
determining, via the first controller, the second duration by subtracting an amount of time to transfer the first frame from the first duration.

12. The method of any of claims 8 to 11, further comprising:
measuring, via the first controller, a transmission speed of the first frame transmitted by the first controller via the in-vehicle network, and
adjusting, via the first controller, the second duration using the transmission speed.
